# FASCICULE DE BREVET EUROPEEN

(11) **EP 2 852 502 B1**
(45) Date de publication et mention de la délivrance du brevet: **14.12.2016**
(21) Numéro de dépôt: 13729979.8
(22) Date de dépôt: 16.05.2013
(51) Int. Cl.: B60J 1/02, B60J 1/18

(54) **PARE-BRISE COMPORTANT UN FENESTRON POURVU D'UNE SEMELLE D'ACCOUPLEMENT INTÉGRÉE DE FORME CONJUGUÉE A CELLE DU MONTANT DE CARROSSERIE**
WINDSCHUTZFENSTER MIT EINER SCHEIBE, DIE MIT EINER INTEGRIERTEN EINLAGE AUSGERÜSTET IST, DIE EINE ZU EINEM TRÄGER DES FAHRZEUGRAHMENS PASSENDE FORM AUFWEIST
WINDSHIELD COMPRISING A WINDOW PROVIDED WITH AN IN-BUILT COUPLING INLAY OF A SHAPE MATED TO THAT OF THE BODYWORK UPRIGHT

(30) Priorité: 21.05.2012 FR 1254605
(43) Date de publication de la demande: 01.04.2015
(73) Titulaire: Peugeot Citroën Automobiles SA, 78140 Vélizy Villacoublay (FR)
(72) Inventeur: SIN, Yong Wook, 92350 Le Plessis Robinson (FR)
(86) Numéro de dépôt international: PCT/FR2013/051083
(87) Numéro de publication internationale: WO 2013/175106

(56) Documents cités:
- EP-A2- 1 690 710
- DE-A1-102004 008 006
- FR-A1- 2 879 511
- US-A- 4 059 469

## Description

La présente invention se rapporte au domaine général des vitrages de véhicules, et notamment de véhicules automobiles, tels que pare-brise, lunettes arrière, ou fenêtres.

En particulier, la présente invention se rapporte à un élément de vitrage selon le préambule de la revendication 1.

On connaît divers agencements de vitrages pour véhicules, et notamment, par le document FR-2 879 511, des pare-brise panoramiques qui comprennent un panneau de vitrage frontal en verre feuilleté pourvu de côtés incurvés formant des joues, ainsi qu'un panneau de toit.

Si de tels pare-brise présentent d'indéniables avantages, notamment en procurant un large champ visuel et un bon apport de lumière qui contribuent au confort visuel du conducteur et à l'agrément des passagers, ainsi qu'à la sécurité de la conduite, ils peuvent toutefois souffrir de certains inconvénients.

En effet, la fixation des différents panneaux de vitrage sur le véhicule requiert l'utilisation de cadres dans lesquels sont enchâssés les panneaux, lesdits cadres étant ensuite fixés sur la carrosserie par collage, vissage ou soudage.

Or, la présence de tels cadres tend, malgré l'importance de la surface vitrée, à limiter le champ visuel du conducteur.

En outre, la mise en oeuvre desdits cadres tend à compliquer l'agencement du véhicule, à occasionner un surcroît d'opérations de fabrication et d'assemblage, et par conséquent à augmenter le temps et le coût de production dudit véhicule.

Enfin, de tels vitrages peuvent présenter un poids particulièrement élevé, en raison de l'utilisation notamment de panneaux en verre feuilleté, ce matériau étant en effet privilégié pour satisfaire aux normes relatives à la sécurité en cas de choc.

Les objets assignés à l'invention visent par conséquent à remédier aux inconvénients susmentionnés et à proposer notamment un nouvel élément de vitrage pour véhicule dont la réalisation et la mise en oeuvre soient simplifiées.

Les objets assignés à l'invention sont atteints à l'aide d'un élément de vitrage pour véhicule comprenant au moins un premier panneau en matériau transparent destiné à venir se fixer au moins sur un montant de la carrosserie d'un véhicule, ledit élément de vitrage étant caractérisé en ce que ledit premier panneau en matériau transparent présente une semelle d'accouplement venue de matière avec ledit premier panneau et qui augmente localement l'épaisseur dudit premier panneau de sorte à former au moins une surface d'accouplement qui est sécante à la surface apparente extérieure du premier panneau, et dont la forme est sensiblement conjuguée à celle de la surface de réception du montant contre laquelle ladite surface d'accouplement doit être appliquée.

Avantageusement, en intégrant ainsi une semelle d'accouplement au panneau transparent lui-même, on peut réaliser un accouplement et une fixation directe dudit panneau transparent sur le montant, sans qu'il soit nécessaire de rapporter une interface, et notamment un cadre opaque, entre ledit panneau transparent et le montant de carrosserie.

On peut ainsi non seulement maximiser l'étendue de la surface transparente utile de l'élément de vitrage, et par conséquent du champ de vision offert aux occupants du véhicule, mais également simplifier et alléger la conception de l'élément de vitrage, et plus globalement du véhicule, ce qui permet de réaliser des économies de matière, d'opérations de fabrication et de temps d'assemblage, et par conséquent d'obtenir un gain de productivité.

De surcroît, la disposition sécante de la surface d'accouplement, de préférence sensiblement transverse à la surface extérieure apparente du panneau transparent, et l'élargissement de l'assise procurée par la semelle, permettent de former un piètement efficace qui assure une fixation robuste et un calage stable dudit panneau sur la carrosserie du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une variante de réalisation d'élément de vitrage conforme à l'invention.
La figure 2 illustre, selon une vue en perspective, une variante de réalisation de panneau transparent conforme à l'invention et destiné à former un fenestron latéral au sein de l'élément de vitrage de la figure 1.
Les figures 3 et 4 illustrent, selon des vues en coupe sensiblement transverses aux montants, le détail de l'emboîtement de deux variantes de réalisation de semelles d'accouplement sur les surfaces de réception correspondantes des montants.

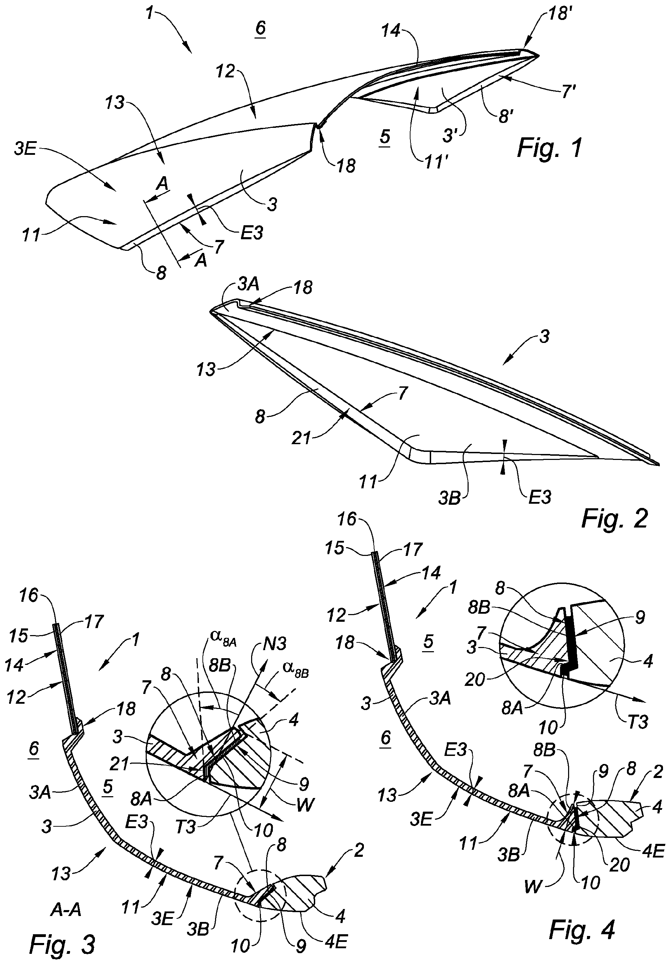

La présente invention concerne un élément de vitrage 1 pour véhicule 2, ledit élément de vitrage 1 comprenant au moins un premier panneau 3 en matériau transparent destiné à venir se fixer au moins sur un montant 4 de la carrosserie d'un véhicule 2, tel que cela est notamment illustré sur les figures 3 et 4.

Quel que soit leur agencement, le panneau 3, et plus globalement l'élément de vitrage 1 dans son ensemble, sont avantageusement destinés à former des cloisons transparentes, de type vitres, séparant, dans le sens de leur épaisseur, l'habitacle 5 de l'environnement extérieur 6 du véhicule, tout en permettant à au moins un occupant du véhicule, et de préférence au conducteur, de percevoir visuellement au moins en partie l'environnement extérieur dudit véhicule.

L'élément de vitrage 1 peut par exemple former un pare-brise, une lunette arrière, voire une cloison interne séparant par exemple l'habitacle arrière du poste de conduite.

Selon l'invention, le premier panneau 3 en matériau transparent présente une semelle d'accouplement 7 venue de matière avec ledit premier panneau 3 et qui augmente localement l'épaisseur E3 dudit premier panneau 3, de sorte à former au moins une surface d'accouplement 8 qui est sécante à la surface apparente extérieure 3E du premier panneau 3, et dont la forme est sensiblement conjuguée à celle de la surface de réception 9 du montant 4 contre laquelle ladite surface d'accouplement 8 doit être appliquée.

Le ou les montants 4, 4' de carrosserie, de préférence métalliques, et généralement opaques, peuvent avantageusement former des piliers, de préférence pleins, qui se dressent à partir de la portion inférieure de la carrosserie et qui s'étendent selon au moins une composante verticale, le cas échéant de façon inclinée par rapport à la direction de marche du véhicule, de sorte à rejoindre le pavillon du véhicule et à soutenir le toit, de préférence aux coins de ce dernier.

De préférence, la semelle d'accouplement 7 bordera la limite de découpe du panneau 3 de sorte à en former la tranche, en longeant de préférence le montant 4 sur la majorité voire la totalité de sa longueur, la surface d'accouplement 8 correspondant alors à au moins un chant latéral remontant dudit premier panneau 3.

Avantageusement, la profondeur W de la semelle 7, qui accroît l'épaisseur E3 du panneau, procure à l'élément de vitrage 1 une assise élargie particulièrement stable en appui contre le montant.

A titre indicatif, ladite profondeur W, considérée, en section sensiblement transverse à la direction génératrice du montant 4 et de la surface d'accouplement 8, et plus particulièrement sensiblement dans un plan horizontal, selon la normale N3 à la tangente T3 à la surface apparente extérieure 3E du panneau 3 au niveau de sa jonction avec ledit montant 4, ladite tangente T3 pouvant notamment se rapprocher de, voire être colinéaire à, la direction de marche avant-arrière du véhicule, pourra être supérieure à 5 mm, à 1 cm, voire à 2 cm, et par exemple être comprise entre 2 cm et 5 cm.

Avantageusement, l'adaptation de la surface d'accouplement 8 sensiblement selon la contreforme de la surface de réception 9, de préférence selon une surface non plane, contribue également au centrage et à l'amélioration du calage de l'élément de vitrage 1 sur la carrosserie.

De préférence, la surface d'accouplement 8 du premier panneau 3 est maintenue directement contre la surface de réception 9 du montant 4 par de la colle à pare-brise 10.

On peut ainsi réaliser simplement et rapidement la fixation du panneau 3, et plus globalement celle de l'élément de vitrage 1, en enduisant la surface d'accouplement 8 (et/ou la surface de réception 9) d'une unique couche de colle 10 interposée et prise en sandwich entre lesdites surfaces 8, 9, et ainsi obtenir une fixation peu onéreuse, qui présente de surcroît une bonne finition esthétique et une bonne étanchéité.

A ce titre, la dimension importante des surfaces d'accouplement 8 et de réception 9 offre une grande superficie d'étalement à la couche de colle 10 et augmente ainsi significativement l'adhérence, et par conséquent la résistance mécanique du joint.

De préférence, l'élément de vitrage 1 sera ainsi fixé sur la carrosserie du véhicule exclusivement par collage.

Selon une variante de réalisation préférentielle, la colle 10 pourra mouiller en totalité la surface d'accouplement 8 (et/ou la surface de réception 9), de sorte à combler l'interstice de jonction entre lesdites surfaces, et de préférence s'étendre exclusivement sur lesdites surfaces, sans déborder sur les surfaces adjacentes, en formant ainsi un joint propre et lisse.

De préférence, tel que cela est illustré sur les figures 1, 3 et 4, le premier panneau forme un fenestron latéral 11, habillant au moins en partie l'un des flancs du véhicule, et pouvant notamment d'une part s'étendre selon une composante d'extension verticale, et d'autre part s'étendre, ou tendre vers, une composante d'extension sensiblement parallèle à la direction de marche du véhicule 2.

De préférence, l'élément de vitrage 1 comportera au moins un pan frontal 12 transparent, qui s'étend sensiblement transversalement à la direction de marche du véhicule, de préférence de façon inclinée verticalement, et le premier panneau 3 formera un pan rabattu latéralement, de type fenestron 11.

Ledit fenestron 11 pourra notamment présenter une forme sensiblement triangulaire ou trapézoïdale, et s'étendre par exemple sur une superficie sensiblement comprise entre 0,03 m² et 0,50 m².

Le panneau 3 pourra avantageusement être bombé vers l'extérieur, à la manière d'une cornière, et présenter deux branches d'un seul tenant, dont une première branche 3A occupant le pan frontal 12 et une seconde branche 3B, sécante à la première, occupant le pan latéral 11, lesdites branches se rejoignant pour former une arête 13, de préférence arrondie.

La semelle 7 sera de préférence ménagée au bord libre de la seconde branche 3B, sensiblement à l'opposé de la première branche 3A et du pan frontal.

Selon une variante de réalisation préférentielle, l'élément de vitrage 1 comprend, tel que cela est illustré sur la figure 1, au moins un pan frontal 12 transparent et au moins deux pans latéraux rabattus 11, 11' disposés de part et d'autre dudit pan frontal 12 et formés respectivement par un premier panneau 3 et un second panneau 3' réalisés chacun dans un matériau transparent et pourvus chacun, sur leur tranche ascendante opposée à leur bord de jonction avec le pan frontal, d'une semelle d'accouplement 7, 7' en surépaisseur qui présente une surface d'accouplement 8, 8' sécante à leur surface apparente extérieure 3E respective et de forme conjuguée à celle du montant 4 de carrosserie qui leur correspond.

Bien entendu, les caractéristiques du second panneau 3' pourront se déduire *mutatis mutandis* de celle du premier panneau 3.

En particulier, le second panneau 3' sera de préférence agencé pour venir se fixer en appui contre un second montant (non représenté) distinct et distant du premier, de sorte à procurer à l'élément de vitrage 1 une fixation équilibrée, répartie notamment sur un premier montant gauche 4 et un second montant droit, qui soutiennent de préférence respectivement chacun un coin du toit.

Le cas échéant, l'élément de vitrage 1 pourra également comporter un pan rabattu supérieur transparent formant un panneau de toit panoramique (non représenté) occupant le pavillon.

Avantageusement, l'élément de vitrage 1 pourra ainsi de présenter sous la forme d'une coque transparente, rigide et autoporteuse, comprenant au moins trois ou quatre pans 11, 12, 11' sécants, formant une pluralité de faces vitrées apparentes, transparentes, et non coplanaires qui permettent d'habiller et de délimiter l'habitacle 5.

De préférence, ladite coque sera dépourvue, y compris une fois mise en place sur le véhicule 2, de montants ou de jointures opaques, et offrira ainsi un vaste champ de vision ininterrompu, grâce à la continuité de sa transparence, en azimut horizontal (de gauche à droite) et/ou en déclinaison verticale (de bas en haut).

En outre, l'élément de vitrage 1 ainsi obtenu forme avantageusement un sous-ensemble d'habillage complet, permettant d'envelopper simultanément plusieurs faces de l'habitacle du véhicule, et qui est manipulable et insérable d'un seul tenant sur ledit véhicule, ce qui simplifie son positionnement et son montage au sein du véhicule.

A titre indicatif, l'élément de vitrage pourra présenter une largeur hors-tout comprise entre 1,00 m et 1,60 m, une hauteur comprise entre 40 cm et 80 cm voire 90 cm, et une longueur, selon la direction de marche du véhicule, sensiblement comprise entre 20 cm et 2,00 m.

Par ailleurs, l'élément de vitrage 1, et en particulier ses pans latéraux 11, 11', ainsi que les montants 4 de carrosserie, présenteront de préférence un agencement sensiblement symétrique par rapport au plan sagittal du véhicule.

Bien entendu, le ou les matériaux transparents entrant dans la composition de l'élément de vitrage 1, qu'ils soient neutres, ou éventuellement teintés ou fumés, seront de préférence sélectionnés de sorte à présenter une bonne stabilité dans le temps, tant vis-à-vis de leur transparence, et en particulier de leur résistance au jaunissement ou à une quelconque autre variation incontrôlée de teinte, que de leurs propriétés mécaniques, et notamment de leur résilience

De préférence, le premier panneau 3 est réalisé d'un seul tenant dans un matériau polymère transparent thermoplastique.

Avantageusement, on peut ainsi réaliser d'une pièce, et le cas échéant en une seule opération, par exemple par thermoformage ou moulage par injection, le premier panneau 3 d'épaisseur variable, et en particulier la semelle 7 intégrée audit panneau, et ce quelle que soit la complexité de forme dudit panneau 3.

On peut ainsi éviter toute opération ultérieure de retouche, et notamment toute opération de surmoulage ou de fixation visant à ajouter au panneau un cadre ou une interface d'adaptation rapportée, entre l'étape de production du panneau 3 et l'étape de fixation, ici directe, de celui-ci sur la carrosserie du véhicule, ce qui permet une économie de matière, d'énergie, et un gain de productivité.

De préférence, le premier panneau 3 est réalisé dans un matériau polymère transparent moins dense que le verre minéral, et préférentiellement en polycarbonate.

Un tel choix permet avantageusement d'alléger l'élément de vitrage 1, et peut notamment procurer un gain de poids de l'ordre de 30 % à 40 % par rapport à un même élément de vitrage qui serait réalisé intégralement en verre feuilleté.

Bien entendu, chacun des pans latéraux 11, 11' pourra être ainsi réalisé en polymère.

Le pan frontal 12 sera quant à lui de préférence réalisé ou couvert en majorité, voire en totalité, par un panneau 14 en verre feuilleté, de préférence d'épaisseur constante, comprenant au moins une feuille de verre 15, formant de préférence la surface apparente extérieure dudit pan frontal 12, et associée à un intercalaire de feuilletage 16, par exemple en polypropylène ou en polyuréthane. Le sandwich pourra éventuellement être complété par une seconde feuille de verre 17 pour former un verre feuilleté tri-couches.

Selon une variante de réalisation non représentée, les pan latéraux 11, 11' pourront être liés l'un à l'autre par un pont en polymère, voire former tous deux avec ledit pont une pièce d'infrastructure monolithique, de préférence obtenue par moulage par injection ou thermoformage, la feuille de verre 15 et l'intercalaire de feuilletage 16 pouvant être directement appliqués, à la manière d'un insert, contre le pont qui les soutient sur toute leur superficie.

Selon une autre variante de réalisation, correspondant aux figures 1 à 4, les pans latéraux 11, 11' pourront être formés par des panneaux 3, 3' individuels, distincts et distants l'un de l'autre, et fixés en bout, par exemple par une couche d'adhésion en polyuréthane thermoplastique, sur les bords latéraux d'un panneau 14 en verre feuilleté, de préférence tri-couches, occupant le pan frontal 12.

Dans l'un et l'autre cas, les panneaux 3, 3' formant les pans latéraux 11, 11' pourront présenter un épaulement 18, 18' accueillant le panneau 14 en verre feuilleté.

Avantageusement, quelle que soit la variante de réalisation retenue, en différenciant les matériaux transparents constitutifs des différents panneaux rigides 3, 3', 14 de l'élément de vitrage 1, on obtient une structure mixte, ou « hybride », regroupant au sein d'un même élément de vitrage 1 d'une part une ou des fenêtre(s) renforcée(s), comprenant du verre feuilleté, matériau présentant à la fois une bonne tenue aux chocs et une dureté élevée qui le rend particulièrement résistant à l'abrasion et aux rayures, et d'autre part une ou des fenêtre(s) allégée(s), dépourvues de verre et réalisées exclusivement en matériau polymère, ce qui permet d'alléger globalement l'élément de vitrage tout en conservant les qualités optiques et mécaniques globales élevées de celui-ci.

De préférence, les fenêtres renforcées correspondront aux zones d'homologation, critiques pour la sécurité ou la visibilité, ou aux zones les plus exposées aux agressions extérieures, telles que le pan frontal 12 du pare-brise, et plus particulièrement la zone d'essuyage balayée par les essuie-glaces, tandis que les fenêtres allégées correspondront de préférence aux zones jugées moins critiques pour la sécurité des occupants du véhicule, telles que par exemple les pans rabattus, et notamment les pans latéraux 11, 11', voire, le cas échéant, un pan de toit panoramique (non représenté).

Par ailleurs, la surface d'accouplement 8 présente de préférence, le long d'un même bord du premier panneau 3, au moins une première face de contact 8A et une seconde face de contact 8B sécante à la première face de contact 8, lesdites faces de contact 8A, 8B étant toutes deux destinées à venir en appui, le cas échéant par l'intermédiaire de la couche de colle 10, contre la surface de réception 9 du montant 4, et délimitant ensemble un tenon saillant 20 (figure 4), ou, au contraire, une mortaise rentrante 21 (figure 3), de telle sorte que la surface d'accouplement 8 du premier panneau 3 puisse s'emboîter avec la surface de réception 9 du montant 4.

Avantageusement, la semelle 7 peut ainsi présenter, notamment en section sensiblement transverse à la génératrice du montant 4, au moins une indentation, et notamment une indentation en V, convexe ou concave, permettant un emboîtement de type mâle/femelle avec le montant 4.

Un tel agencement permet de réaliser une jonction enveloppante particulièrement efficace pour le positionnement puis le blocage en position du panneau 3 par rapport au montant 4.

En effet, les faces de contact 8A, 8B pourront avantageusement délimiter soit une dent dont le sommet pénètre, sensiblement selon la direction d'accouplement, dans le creux du montant 4 (figure 4), soit au contraire, une encoche recevant une dent conjuguée formée, par exemple par taillage ou emboutissage, dans le montant 4 (figure 3).

Lesdites faces de contact 8A, 8B peuvent ainsi offrir des butées, selon au moins deux directions sécantes de l'espace, lesquelles butées contribuent au centrage et à l'immobilisation de l'élément de vitrage 1 contre le montant 4, en formant par exemple obstacle à la fois à l'enfoncement de l'élément de vitrage 1 selon la direction de marche du véhicule (de l'avant vers l'arrière, dans le cas d'un pare-brise), et au glissement latéral (de gauche à droite ou inversement) par rapport à la carrosserie.

De préférence, la première et la seconde face de contact 8A, 8B seront de profondeur différente, la première face de contact 8A, plus courte, s'étendant de préférence sur une épaisseur plus faible que la seconde, la seconde face de contact 8B, plus longue, délimitant ainsi une sorte d'ergot saillant de la semelle 7, tel que cela est illustré sur les figures 3 et 4.

Par ailleurs, l'angle d'azimut α_{8A}, α_{8B} selon lequel la ou les faces de contact 8A, 8B de la surface d'accouplement 8 sont orientées sera avantageusement choisi pour éviter de créer des conditions favorables au glissement relatif de l'élément de vitrage 1 par rapport au montant 4, et en particulier pour éviter un fort cisaillement de la couche de colle 10 entre la surface d'accouplement 8 et la surface de réception 9.

A ce titre, tel que cela est illustré sur la figure 3, ledit angle d'azimut α_{8A}, α_{8B}, mesuré par rapport à la normale N3 à la tangente T3 au profil générateur du panneau 3, profil générateur selon lequel l'élément de vitrage accoste le montant et transmet des contraintes à la jonction, sera de préférence compris sensiblement entre + 40 degrés et - 40 degrés, et préférentiellement non nul.

Les faces de contact 8A, 8B pourront être incurvées, ou au contraire planes.

Leur nombre ne sera pas nécessairement limité à une ou deux, le profil transverse d'accouplement de la semelle 7 pouvant présenter une pluralité de dents, et donc une succession d'au moins trois ou quatre faces de contact, ou davantage, qui s'enchaînent selon une ligne brisée, ou bien encore des cannelures, ou tout type de relief équivalent, pour lequel la surface de réception 9 présente une forme conjuguée.

La ou les faces de contact 8A, 8B composant la surface d'accouplement 8 pourront être lisses, ou présenter une rugosité facilitant l'accroche de la couche de colle 10.

L'invention concerne bien entendu en tant que tel un véhicule 2, et notamment un véhicule automobile, par exemple destiné au transport individuel ou collectif de personnes, équipé d'un élément de vitrage 1 selon l'une des revendications précédentes, dont la surface d'accouplement 8 est fixée, et de préférence collée, en appui contre au moins un montant 4, et de préférence deux montants successifs, par exemple deux montant frontaux, de la carrosserie dudit véhicule.

Le cas échéant, un tel assemblage par semelle 7, 7' renforcée venant en appui sur un élément de carrosserie conjugué pourra être mis en oeuvre aussi bien sur le chant formant le rebord libre ascendant du panneau 3, 3' que sur le chant inférieur formant la base, de préférence sensiblement horizontale, dudit panneau 3, 3', et ce en particulier sur chacun des deux fenestrons latéraux 11, 11'.

Avantageusement, l'invention rend envisageable la fixation directe d'un élément de vitrage entièrement transparent par simple collage sur chants contre la carrosserie, et en particulier contre les montants 4 de celle-ci.

Par ailleurs, la surface d'accouplement 8 forme de préférence un renvoi en retrait de la surface apparente extérieure 3E du premier panneau 3, de sorte à s'étendre vers l'intérieur de l'habitacle 5 du véhicule une fois le panneau 3 en place sur ce dernier.

En particulier, la surface extérieure apparente 3E du premier panneau pourra de préférence affleurer sensiblement de niveau avec la surface extérieure apparente 4E du montant auquel ledit premier panneau 3 est fixé, tel que cela est illustré sur les figures 3 et 4.

Avantageusement, la jonction entre l'élément de vitrage 1 et la carrosserie peut ainsi présenter un aspect lisse, soigné, et aérodynamique, de surcroît peu sujet à l'encrassement et facile à nettoyer, le panneau 3 et le montant 4 se trouvant dans le prolongement l'un de l'autre.

Un tel agencement, avec une semelle 7 sensiblement en L, peut donc contribuer à améliorer la finition du véhicule, et à favoriser l'écoulement de l'air autour du véhicule, ce qui contribue à limiter les bruits et la consommation de carburant.

Ceci étant, il n'est toutefois pas exclu que, selon une variante de réalisation non représentée, la semelle 7 puisse se présenter sous une forme en T, avec des protubérances faisant saillie aussi bien vers l'extérieur que vers l'intérieur du véhicule, en surépaisseur de part et d'autre du panneau 3.

Bien entendu, l'homme du métier sera à même d'isoler ou de combiner entre elles tout ou partie des caractéristiques décrites ci-dessus, notamment en ce qui concerne l'agencement de la semelle d'accouplement, selon la forme, la silhouette, ou les propriétés optiques, mécaniques, esthétiques ou aérodynamiques qu'il souhaite conférer à l'élément de vitrage 1, et/ou selon les efforts, notamment de compression ou cisaillement, qui devront être supportés par l'élément de vitrage 1 et sa jonction avec les montants 4 de carrosserie.

La présente invention peut également concerner un procédé de fabrication d'un élément de vitrage 1 ou d'un véhicule 2 tels que décrits plus haut.

En particulier, ledit procédé pourra comporter une étape (a) de fabrication d'un panneau transparent au cours de laquelle on réalise, de préférence en une seule opération de mise en forme, et préférentiellement par moulage par injection, un panneau 3, 3' monolithique en matériau transparent qui intègre d'emblée une semelle d'accouplement 7 formant un renflement profilé de forme conjuguée à celle du montant, tel que cela a été décrit plus haut.

Ledit procédé pourra ensuite comprendre une étape (b) de préparation d'un élément de vitrage au cours de laquelle on assemble plusieurs panneaux transparents rigides 3, 3', 14, dont de préférence au moins deux panneaux monobloc formés selon l'étape (a), de sorte à créer un élément de vitrage 1 à plusieurs pans 11, 12, 11' sécants, puis une étape (c) d'assemblage sur le véhicule au cours de laquelle on rapporte le sous-ensemble formé par l'élément de vitrage 1 sur la carrosserie du véhicule 2, et l'on applique et l'on presse la ou les semelles 7 contre les montants 4 correspondants, après avoir enduit de colle 10 à pare-brise l'une et/ou l'autre des surfaces d'accouplement 8 et/ou de réception 9, puis on fait, ou on laisse, polymériser (« sécher ») ladite colle afin d'arrimer l'élément de vitrage 1 à la carrosserie.

## Revendications

1. Elément de vitrage (1) pour véhicule (2) comprenant au moins un premier panneau (3) en matériau transparent destiné à venir se fixer au moins sur un montant (4) de la carrosserie d'un véhicule (2), ledit élément de vitrage étant **caractérisé en ce que** ledit premier panneau (3) en matériau transparent présente une semelle d'accouplement (7) venue de matière avec ledit premier panneau (3) et qui augmente localement l'épaisseur (E3) dudit premier panneau (3), de sorte à former au moins une surface d'accouplement (8) qui est sécante à la surface apparente extérieure (3E) du premier panneau (3), et dont la forme est sensiblement conjuguée à celle de la surface de réception (9) du montant (4) contre laquelle ladite surface d'accouplement (8) doit être appliquée.

2. Elément de vitrage selon la revendication 1 **caractérisé en ce que** le premier panneau (3) forme un fenestron latéral (11).

3. Elément de vitrage selon la revendication 1 ou 2 **caractérisé en ce que** le premier panneau (3) est réalisé d'un seul tenant dans un matériau polymère transparent thermoplastique.

4. Elément de vitrage selon l'une des revendications précédentes **caractérisé en ce que** le premier panneau (3) est réalisé dans un matériau polymère transparent moins dense que le verre minéral, de préférence en polycarbonate.

5. Elément de vitrage selon l'une des revendications précédentes **caractérisé en ce que** la surface d'accouplement (8) forme un renvoi en retrait de la surface apparente extérieure (3E) du premier panneau (3), de sorte à s'étendre vers l'intérieur de l'habitacle (5) du véhicule une fois le panneau (3) en place sur ce dernier.

6. Elément de vitrage selon l'une des revendications précédentes **caractérisé en ce que** la surface d'accouplement (8) présente, le long d'un même bord du premier panneau (3), au moins une première face de contact (8A) et une seconde face de contact (8B) sécante à la première, lesdites faces de contact (8A, 8B) étant toutes deux destinées à venir en appui contre la surface de réception (9) du montant, et délimitant ensemble un tenon saillant (20), ou, au contraire, une mortaise rentrante (21), de telle sorte que la surface d'accouplement (8) du premier panneau (3) puisse s'emboîter avec la surface de réception (9) du montant (4).

7. Elément de vitrage selon l'une des revendications précédentes **caractérisé en ce qu'**il comprend au moins un pan frontal (12) transparent et au moins deux pans latéraux rabattus (11, 11') disposés de part et d'autre dudit pan frontal (12) et formés respectivement par le premier panneau (3) et un second panneau (3') réalisés chacun dans un matériau transparent et pourvus chacun, sur leur tranche ascendante opposée à leur bord de jonction avec le pan frontal (12), d'une semelle d'accouplement (7, 7') en surépaisseur qui présente une surface d'accouplement (8, 8') sécante à leur surface apparente extérieure (3E) respective et de forme conjuguée à celle du montant (4) de carrosserie qui leur correspond.

8. Elément de vitrage selon la revendication 7, **caractérisé en ce que** le pan frontal (12) comprend un panneau (14) en verre feuilleté, comprenant au moins une feuille de verre (15), formant de préférence la surface apparente extérieure dudit pan frontal (12), et associée à un intercalaire de feuilletage (16), tel qu'en polypropylène, en polyuréthane.

9. Elément de vitrage selon la revendication 8, **caractérisé en ce que** les pans latéraux (11, 11') sont liés l'un à l'autre par un pont en polymère, le panneau (14) pouvant être directement appliqués, à la manière d'un insert, contre le pont qui le soutient sur toute sa superficie.

10. Elément de vitrage selon la revendication 9, **caractérisé en ce que** les pans latéraux (11, 11') forment tous deux avec ledit pont une pièce d'infrastructure monolithique, de préférence obtenue par moulage,

11. Elément de vitrage selon la revendication 8, **caractérisé en ce que** les pans latéraux (11, 11') sont formés par des panneaux (3, 3') individuels, distincts et distants l'un de l'autre, et fixés en bout sur les bords latéraux du panneau (14), occupant le pan frontal (12).

12. Elément de vitrage selon l'une des revendications 10 ou 11, **caractérisé en ce que** les pans latéraux (11, 11') présentent un épaulement (18, 18') accueillant le panneau (14).

13. Véhicule (2) équipé d'un élément de vitrage (1) selon l'une des revendications précédentes, dont la surface d'accouplement (8) est fixée, et de préférence collée, en appui contre au moins un montant (4), et de préférence deux montants successifs, de la carrosserie dudit véhicule.

14. Véhicule selon la revendication 13, **caractérisé en ce que** la surface d'accouplement (8) du premier panneau (3) est maintenue directement contre la surface de réception (9) du montant (4) par de la colle à pare-brise (10).

15. Véhicule selon la revendication 13 ou 14, **caractérisé en ce que** la surface extérieure apparente (3E) du premier panneau (3) affleure sensiblement de niveau avec la surface extérieure apparente (4E) du montant (4) auquel ledit premier panneau est fixé.

## Patentansprüche

1. Verglasungselement (1) für Fahrzeug (2), das mindestens eine erste Platte (3) aus einem durchsichtigen Werkstoff umfasst, die dazu bestimmt ist, an mindestens einem Ständer (4) der Karosserie eines Fahrzeugs (2) befestigt zu werden, Verglasungselement **dadurch gekennzeichnet, dass** die erste Platte (3) aus durchsichtigem Werkstoff eine Kopplungssohle (7) aufweist, die aus einem Stück mit der ersten Platte (3) besteht, und die stellenweise die Stärke (E3) der ersten Platte (3) derart erhöht, dass mindestens eine Kopplungsoberfläche (8) gebildet wird, die an der sichtbaren äußeren Oberfläche (3E) der ersten Platte (3) schneidet, und deren Form im Wesentlichen zu der der Aufnahmeoberfläche (9) des Ständers (4), gegen den die Kopplungsoberfläche (8) angelegt werden muss, passt.

2. Verglasungselement nach Anspruch 1, **dadurch gekennzeichnet, dass** die erste Platte (3) einen seitlichen Fenestron (11) bildet.

3. Verglasungselement nach Anspruch 1 oder 2, **dadurch gekennzeichnet, dass** die erste Platte (3) aus einem einzigen Stück aus einem durchsichtigen Thermoplast-Polymerwerkstoff hergestellt ist.

4. Verglasungselement nach einem der vorhergehenden Ansprüche, **dadurch gekennzeichnet, dass** die erste Platte (3) aus einem durchsichtigen Polymerwerkstoff hergestellt ist, der weniger dicht ist als Mineralglas, bevorzugt aus Polycarbonat.

5. Verglasungselement nach einem der vorhergehenden Ansprüche, **dadurch gekennzeichnet, dass** die Kopplungsoberfläche (8) eine Umlenkung in Rücksprung von der sichtbaren äußeren Oberfläche (3E) der ersten Platte (3) derart bildet, dass sie sich zum Inneren des Fahrzeuginnenraums (5) des Fahrzeugs erstreckt, sobald die Platte (3) auf diesem Letzteren an Ort und Stelle ist.

6. Verglasungselement nach einem der vorhergehenden Ansprüche, **dadurch gekennzeichnet, dass** die Kopplungsoberfläche (8) entlang ein und desselben Rands der ersten Platte (3) mindestens eine erste Berührungsseite (8A) und eine zweite Berührungsseite (8B), die an der ersten schneidet, aufweist, wobei die Berührungsseiten (8A, 8B) beide dazu bestimmt sind, gegen die Aufnahmeoberfläche (9) des Ständers zum Aufliegen zu kommen, und indem sie gemeinsam eine vorstehende Feder (20) abgrenzen, oder, im Gegenteil, eine zurückspringende Nut (21), so dass sich die Kopplungsoberfläche (8) der ersten Platte (3) mit der Aufnahmeoberfläche (9) des Ständers (4) verschachteln kann.

7. Verglasungselement nach einem der vorhergehenden Ansprüche, **dadurch gekennzeichnet, dass** es mindestens eine durchsichtige frontale Bahn (12) und mindestens zwei seitliche zurückgeklappte Bahnen (11, 11') umfasst, die auf jeder Seite der frontalen Bahn (12) angeordnet sind und jeweils aus der ersten Platte (3) und einer zweiten Platte (3') bestehen, die jeweils aus einem durchsichtigen Werkstoff hergestellt sind und jeweils auf ihrer steigenden Kante, die ihrem Verbindungsrand mit der vorderen Bahn (12) entgegengesetzt ist, mit einer Kopplungssohle (7, 7') in Überdicke versehen sind, die eine Kopplungsoberfläche (8, 8') aufweist, die an ihrer jeweiligen sichtbaren äußeren Oberfläche (3E) schneidet und eine Form hat, die zu der des Karosserieständers (4), der ihnen entspricht, passt.

8. Verglasungselement nach Anspruch 7, **dadurch gekennzeichnet, dass** die frontale Bahn (12) eine Platte (14) aus Sicherheitsglas umfasst, die mindestens ein Glasband umfasst, das bevorzugt die äußere sichtbare Oberfläche der frontalen Bahn (12) bildet und mit einer Laminierzwischenlage (16) assoziiert ist, wie zum Beispiel aus Polypropylen, aus Polyurethan.

9. Verglasungselement nach Anspruch 8, **dadurch gekennzeichnet, dass** die seitlichen Bahnen (11, 11') miteinander durch eine Brücke aus Polymer verbunden sind, wobei die Platte (14) direkt auf die Art eines Einsatzes gegen die Brücke, die sie auf ihrer gesamten Oberfläche stützt, angelegt werden kann.

10. Verglasungselement nach Anspruch 9, **dadurch gekennzeichnet, dass** die seitlichen Bahnen (11, 11') beide mit der Brücke ein einteiliges Infrastrukturteil bilden, das bevorzugt durch Formen erhalten wird.

11. Verglasungselement nach Anspruch 8, **dadurch gekennzeichnet, dass** die seitlichen Bahnen (11, 11') aus einzelnen separaten und voneinander beabstandeten Platten (3, 3') gebildet sind und die am Ende auf den Seitenrändern der Platte (14), die die frontale Bahn (12) belegt, befestigt sind.

12. Verglasungselement nach einem der Ansprüche 10 oder 11, **dadurch gekennzeichnet, dass** die seitlichen Bahnen (11, 11') einen Ansatz (18, 18') aufweisen, der die Platte (14) aufnimmt.

13. Fahrzeug (2), das mit einem Verglasungselement (1) nach einem der vorhergehenden Ansprüche ausgestattet ist, dessen Kopplungsoberfläche (8) in Auflage gegen mindestens einen Ständer (4) und bevorzugt gegen zwei aufeinanderfolgende Ständer der Karosserie des Fahrzeugs befestigt und bevorzugt geklebt ist.

14. Fahrzeug nach Anspruch 13, **dadurch gekennzeichnet, dass** die Kopplungsoberfläche (8) der ersten Platte (3) direkt gegen die Aufnahmeoberfläche (9) des Ständers (4) von Windschutzscheibenklebstoff (10) gehalten wird.

15. Fahrzeug nach Anspruch 13 oder 14, **dadurch gekennzeichnet, dass** die sichtbare äußere Oberfläche (3E) der ersten Platte (3) im Wesentlichen mit der sichtbaren äußeren Oberfläche (4E) des Ständers (4), an dem die erste Platte befestigt ist, bündig ist.

## Claims

1. A glazing element (1) for a vehicle (2) including at least one first panel (3) of transparent material intended to be fixed at least to an upright (4) of the bodywork of a vehicle (2), said glazing element being **characterized in that** said first panel (3) of transparent material has a coupling sole (7) formed as an integral part of said first panel (3) and which locally increases the thickness (E3) of said first panel (3) so as to form at least one coupling surface (8) which is secant with the visible exterior surface (3E) of the first panel (3), and the shape of which more or less mates with that of the receiving surface (9) of the upright (4) against which said coupling surface (8) is to be applied.

2. The glazing element according to Claim 1, **characterized in that** the first panel (3) forms a side window (11).

3. The glazing element according to Claim 1 or 2, **characterized in that** the first panel (3) is made in one piece from a transparent thermoplastic polymer material.

4. The glazing element according to one of the preceding claims, **characterized in that** the first panel (3) is made from a transparent polymer material less dense than mineral glass, preferably of polycarbonate.

5. The glazing element according to one of the preceding claims, **characterized in that** the coupling surface (8) forms a return recessed from the visible exterior surface (3E) of the first panel (3), so as to extend towards the interior of the passenger compartment (5) of the vehicle once the panel (3) is in place on the latter.

6. The glazing element according to one of the preceding claims, **characterized in that** the coupling surface (8) has, along a same edge of the first panel (3), at least a first contact face (8A) and a second contact face (8B) secant with the first, said contact faces (8A, 8B) being both intended to come to rest against the receiving surface (9) of the upright, and delimiting together a projecting tenon (20), or, on the other hand, an inset mortise (21), such that the coupling surface (8) of the first panel (3) can fit together with the receiving surface (9) of the upright (4).

7. The glazing element according to one of the preceding claims, **characterized in that** it includes at least one transparent front sheet (12) and at least two folded lateral sheets (11, 11') disposed on either side of said front sheet (12) and formed respectively by the first panel (3) and a second panel (3') each made from a transparent material and each provided, on their rising section opposite their joining edge with the front sheet (12), with a coupling sole (7, 7') with excess thickness, which has a coupling surface (8, 8') secant with their respective visible exterior surface (3E) and having a shape which mates with that of the upright (4) of bodywork which corresponds with them.

8. The glazing element according to Claim 7, **characterized in that** the front sheet (12) includes a panel (14) of laminated glass, including at least one sheet of glass (15), preferably forming the visible exterior surface of said front sheet (12), and associated with a lamination spacer (16), such as of polypropylene, of polyurethane.

9. The glazing element according to Claim 8, **characterized in that** the lateral sheets (11, 11') are linked to one another by a bridge made of polymer, the panel (14) being able to be directly applied, in the manner of an insert, against the bridge which supports is over its entire surface area.

10. The glazing element according to Claim 9, **characterized in that** the lateral sheets (11, 11') both form with said bridge a monolithic infrastructure piece, preferably obtained by moulding.

11. The glazing element according to Claim 8, **characterized in that** the lateral sheets (11, 11') are formed by individual panels (3, 3') which are distinct and distant from one another, and fixed at the end on the lateral edges of the panel (14), occupying the front sheet (12).

12. The glazing element according to one of Claims 10 or 11, **characterized in that** the lateral sheets (11, 11') have a shoulder (18, 18') accommodating the panel (14).

13. A vehicle (2) equipped with a glazing element (1) according to one of the preceding claims, the coupling surface (8) of which is fixed, and preferably glued, resting against at least one upright (4), and preferably two successive uprights, of the bodywork of said vehicle.

14. The vehicle according to Claim 13, **characterized in that** the coupling surface (8) of the first panel (3) is held directly against the receiving surface (9) of the upright (4) by windscreen glue (10).

15. The vehicle according to Claim 13 or 14, **characterized in that** the visible exterior surface (3E) of the first panel (3) is substantially flush with the visible exterior surface (4E) of the upright (4) to which said first panel is fixed.
